# EUROPEAN PATENT APPLICATION

(11) **EP 4 212 973 A1**
(43) Date of publication of application: **19.07.2023**
(21) Application number: 22151276.7
(22) Date of filing: 13.01.2022
(51) Int. Cl.: G05B 19/4065, G05B 13/02

(54) **METHOD AND SYSTEM FOR QUALITY INSPECTION**

(71) Applicant: Siemens Aktiengesellschaft, 80333 München (DE)
(72) Inventor: Wartke, Frederike, 40789 Monheim (DE); Müller, Stanislaus, 41469 Neuss (DE)
(74) Representative: Siemens Patent Attorneys

(57) **Abstract**

A computer-implemented method for quality inspection of a component (1) of a manufacturing device (2, 3, 4),
obtaining operational data (11) relating to the operation of the manufacturing device (2, 3, 4), the operational data (11) comprising time series of one or more physical properties of the manufacturing device (2, 3, 4),
obtaining status (12) data relating to a component (1) of the manufacturing device (2, 3, 4), the status data (12) comprising events relating to and/or characteristic properties relevant for the utilization of the component (1) within the manufacturing device (2, 3, 4),
labelling one or more subsets of the operational data (11) by associating one or more of the events and/or characteristic properties to the one or more subsets,
providing the one or more subsets as labelled training data for training a machine learning model (ML), wherein the machine learning model (ML) serves for outputting a quality indicator (Q) based on the labelled training data input,
and providing the trained machine learning model (ML) for quality inspection.

## Description

### TECHNICAL FIELD

The invention relates to production systems and the higher-level information systems.

### BACKGROUND

Industrial connectors establish a connection between a production system and a higher-level information system based on a gateway solution. Siemens provides a standard way to gather machine data from control systems, third-party CNC controls and automation technology. The service consists of consulting, implementation and maintenance to ensure seamless data transfer. The connectivity management and monitoring software running inside a gateway connecting the production system with the higher level information system can be hosted on any IPC or Virtual Machine which, e.g., runs Linux Debian 9 or 10 and Docker CE. The service can also run in a virtual machine. To run the service in a virtual machine a VMware server, for example supporting Debian 10, is required.

### SUMMARY

Process data on a manufacturing device of the production system may be continuously recorded by the gateway. This process data may be stored in a database as a time series, e.g., using InfluxDB. However, the process sequences of a manufacturing device, such as a machine tool, is not continuous, but divided into individual orders, workpieces and processing steps. In addition, individual operations are performed with different components, e.g., different machine tools. In order to optimizations the operation of the production system and the manufacturing device in particular, and to carry out predictive maintenance or to detect wear, etc., operational data relating to a specific processing step and/or to a specific component and an indication relating to quality, component and the like are required.

Currently, the operational data may be recorded directly as individual measurements edge, e.g., using NC-trace. But then, no further adjustments can be made afterwards. Alternatively, a user can continuously store the operational data on his preferred storage platform. Then, it is possible to search for trigger values within the operational data and visualize the data for a time period selected. However, this requires manual work and must be implemented for each manufacturing device individually. Collecting operational data of similar processes is thus not possible or becomes very tedious.

It is an object of the present invention to prepare operational data in such a way that individual process sections or stages can be selected, visualized and/or used as input data for machine learning models.

According to a first aspect the object is achieved by a computer-implemented method for quality inspection of a component of a manufacturing device. The method comprising the step of obtaining operational data relating to the operation of the manufacturing device, the operational data comprising time series of one or more physical properties of the manufacturing device. The method comprising the step of obtaining status data relating to a component of the manufacturing device, the status data comprising events relating to and/or characteristic properties relevant for the utilization of the component within the manufacturing device. The method comprising the step of labelling one or more subsets of the operational data by associating one or more of the events and/or characteristic properties to the one or more subsets. The method comprising the step of providing the one or more subsets as labelled training data for training a machine learning model, wherein the machine learning model serves for outputting a quality indicator based on the labelled training data input. The method comprising the step of providing the trained machine learning model for quality inspection.

According to a second aspect the object is achieved by an apparatus. The apparatus preferably comprising a processor and a memory. The apparatus operative to perform the method steps according to the first aspect.

Advantageous embodiments are provided in the dependent claims and are furthermore described in the following.

### BRIEF DESCRIPTION OF THE DRAWINGS

- Figure 1: shows a production system comprising a tool, a tool measurement and/or presetting device, a tool storage device, and a machine tool.
- Figure 2: shows a machine tool and a tool measuring device, both connected to a gateway and transmitting data to the gateway and a higher-level information system.
- Figure 3: shows a clients on a machine tool and a tool measuring device transmitting data to one or more servers of a gateway.
- Figure 4: shows the augmentation of operational data with status data.
- Figure 5: shows the training of a machine learning model based operational data.
- Figure 6: shows the inference of a quality indicator based on operational data input in the trained machine learning model.

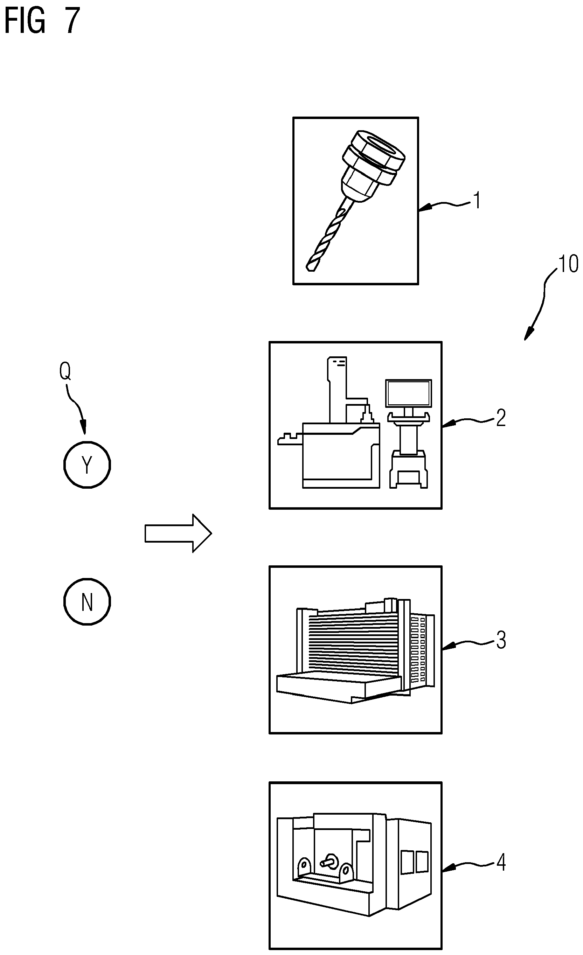

- Figure 7: shows the usage of the quality indicator in a production system.

### DETAILED DESCRIPTION

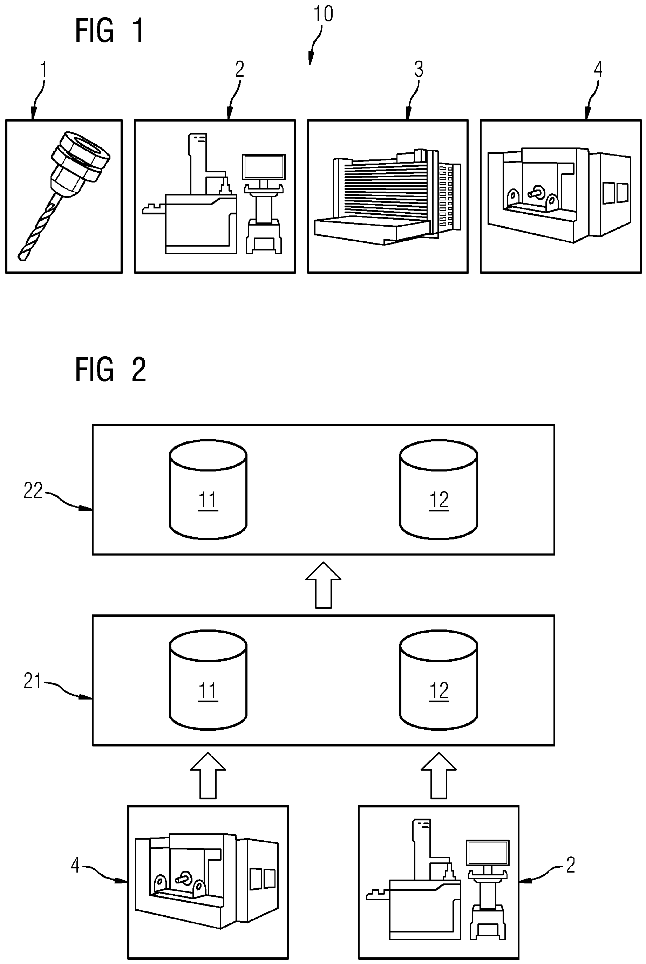

As shown in Figure 1 a production system 10 may comprises a machine tool 4 that is controlled via computerized numerical control, i.e. a CNC machine tool also referred to NC control. The production system 10 comprises a tool presetting and/or tool measuring apparatus 2 that is configured for measuring and/or presetting a tool 1. The tool presetting and/or tool measuring apparatus 2 is configured to create and/or determine at least one tool data set, in particular a tool presetting data set, a tool measuring data set and/or a tool processing data set, of the tool 1. The tool 1 may for example be a milling tool such as a ball nose end mill, a conical ball end, an end mill, and end mill corner rounding or an angle head cutter.

The tool storage device 3 comprises at least one tool storage element, for example a depository, a suspension, a clip, a stand, or the like, for a storage, in particular a temporary fixation, of the tool 1.

In a loading and processing step, the machine tool 4 is loaded, e.g., from tool storage device 3 or presetting and/or tool measuring apparatus 2, with the tool 1 and then a workpiece, not shown, is processed with the machine tool 4 and the tool 1, e.g., in one or more process sections or stages or steps. After completion of processing of the workpiece with the tool 1, the tool 1 is unloaded from the machine tool 4 and stored in storage device 3, and/or measured and/or preset by tool presetting and/or measuring device 2. Alternatively, after completion of processing of the one or more workpieces the tool remains in the machine tool 4 until the next usage, e.g., for processing of another workpiece.

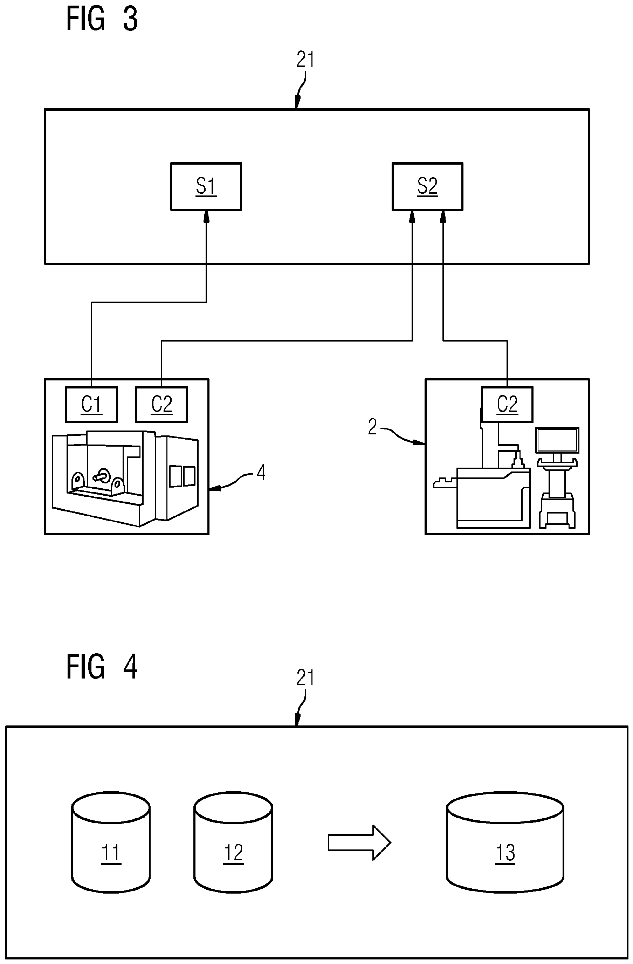

Turning to Figure 2 and Figure 3 respectively, a gateway 21 may be implemented in software and may be installed on a computer, e.g., an industrial PC, IPC, or edge device, which establishes the connection between the various manufacturing devices in the production system and a higher-level information system 22. To that end, a client C1, C2 may be installed on a machine tool 4, such as SINUMERIK, in order to connect the machine tool 4 to the gateway 21. The gateway 21 in that case serves as a server to the client on the machine tool 4. That is to say the gateway 21 comprises one or more serves communicatively coupled to the one or more clients on the one or more manufacturing devices.

The gateway 21 may thus comprise a server that enables communication with manufacturing devices in the production system. That is to say, a gateway 21 may be connected to a plurality of manufacturing devices of a production system. Hence, multiple data sources such as SINUMERIK 840D control systems, of a machine tool, or other third-party control systems may be provided, as shown in Figures 2 and 3.

High-frequency data acquisition in the interpolation or servo cycle of the control system of the manufacturing device may be provided, e.g., according to a configuration about every 10 ms and 2 ms. For example, the following variables may be recorded: NC-/ PLC-variables, Global user data, Servo variables. This operational data can be recorded continuously or at specific points of the NC program, e.g., triggered by a start and stop condition. These conditions can be configured for data acquisition with the client C1, C2.

The gateway's 21 file transfer provides an application interface to access files located on connected manufacturing device 2, 4. This interface may be based on the standard protocol such as WebDAV. It allows to create, write, delete, rename and read files and directories. It also allows to estimate file attributes: file size and date/time of the last change. The gateway 21 does not require a local storage for file transfer, it may accesses files directly on the machines. The WebDAV protocol is, e.g., based on the HTTP protocol and/or is encrypted, e.g., with TLS 1.2/1.3. Thus, it is possible to access files of the connected manufacturing devices, such as machine tool4 or apparatus 2. For the control system it is possible to access the files from the NC as well as files from the HMI component. Thus, a software may be provided to perform inventory management on the server S1, S2 on the gateway that is connected to the one or more manufacturing device, e.g., machine tool 4. For machine tools, such a software may manage the complete tool circuit within a production system, as described in connection with Figure 1.

This software facilitates resource optimization and reduces downtimes by providing optimized master data, correction (offset) data and OEM tool data. It also supports tool management and tool handling, or component management in general. Within this software there are several options to store a tool. The tool can for example be located on a machine tool or it can be stored in a container, such as the storage device 3, also referred to as assembly container.

For example, as soon as an instance of a tool is created using the presetting and/or measurement device 2, the tool may be placed in the assembly container 3. The assembly state of a tool 1 can be for example to be obtained, to be overhauled, to be assembled, to be measured, to be provided. Tools 1 can also be unloaded from a machine tool 4 to a container or be discarded from further usage. Furthermore, the assembly state of a tool can be set to a state that prevents further usage of the tool. Furthermore, an indication be obtained that prevents further usage of the workpiece, e.g., because it is faulty and/or does not match the required quality, for example because it has been produced using a certain tool.

Previous solutions often only provide raw operational data. However, analyzing the operation of a manufacturing device requires a lot of pre-processing of the raw data. The invention is intended to close this gap. In particular it is intended to overcome the drawbacks that the recording of operational data was only possible in an uninterrupted and continuous manner and that the operational data thus was not prepared for, e.g., training a machine learning model. Furthermore, it was not possible to assign quality data, measuring or pre-setting data, and/or tool data, or status data, in general retrospectively. Furthermore, it was not possible to change a once set trigger or status data. Rather the processing step, e.g., measurement, had to be re-performed in order to gain the desired augmented, e.g., labelled, operational data.

It is thus proposed as, e.g., shown in Figure 2 to obtain operational data 11 relating to the operation of the manufacturing device, in this case a machine tool. The operational data 11 may comprise time series of one or more physical properties of the manufacturing device. Furthermore, it is proposed to obtaining status data 12 relating to a component of the manufacturing device, in this case a tool, also known and referred to as machining tool. The status data 12 may comprise events relating to and/or characteristic properties relevant for the utilization of the component within the manufacturing device. The operational data and the status data can be received, e.g., at a gateway 21, for example on an edge device, where it can be stored and/or further transmitted to a remote storage, such as a database, for example in a networked computing infrastructure, i.e. cloud, of a high-level information system 22.

Turning to Figure 4 further embodiments are described in the following. The status data 12 may be used for labelling the operational data 11. It is proposed to label one or more subsets of the operational data 11 by associating one or more of the events and/or characteristic properties to the one or more subsets. Thereby an augmented data set 13 may be obtained.

The status data may comprise a tool ID, identifying the instance of a tool. The status data may comprise master data of the tool, the name of the tool, e.g., in the NC program. The status data may comprise the location of the tool, e.g., whether the tool is located in a cabinet such as the storage device or assembly container. The status data may comprise user defined attributes.

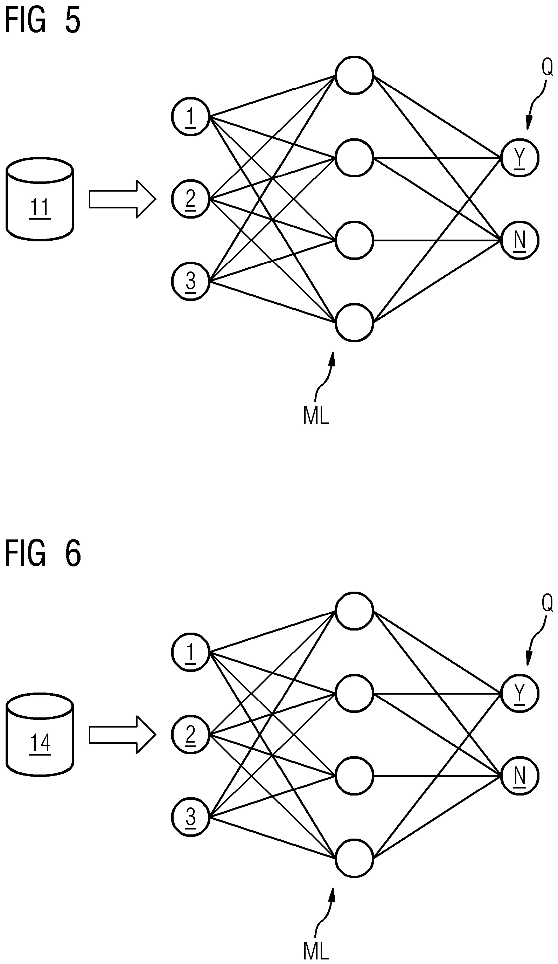

Turning to Figure 5 further embodiments are described in the following. It is proposed to provide the one or more subsets of the operational data as labelled training data for training a machine learning model ML, wherein the machine learning model ML serves for outputting a quality indicator based on the labelled training data input. The machine learning model ML takes the operational data as input and serves for outputting a quality indicator Q. The quality indicator Q may represent a nominal or abnormal operation of the manufacturing device, e.g., during a time span during which a certain status applies. It should be understood that the training of the machine learning model ML can take place in the gateway 21 and/or in the higher-level information system 22.

Turning to Figure 5 further embodiments are described in the following. It is proposed to provide the trained machine learning model ML for quality inspection. To that end, the newly obtained operational data can be fed into the machine learning model. The, previously trained, machine learning model may then output a quality indicator Q. The quality indicator Q may indicate whether an anomaly, the machine learning model was trained to determine, is present in the newly obtained operational data. As shown in Figure 5 the quality indicator may take on the values Y and N, wherein Y indicates that there is an anomaly present and N indicates that there is no anomaly present in the operational data. Hence, a quality indicator may indicate different classifications, e.g., using the labels from the status data, e.g., a bad workpiece quality or an exceeded tolerance of the component and/or the workpiece. Thus, one or more labels assigned to (one or more subsets of) the operational data may be used as a quality indicator of the machine learning model. Hence, the trained machine learning model may classify the operational data input according to the label that has been assigned to (the one or more subsets of) the operational data that was used as training data. Hence a first classification class, e.g., quality indicator value Y, may indicate that the component has exceeded a predetermined tolerance and a second classification class, e.g., quality indicator N, may indicate that the component has not exceeded the predetermined tolerance. As mentioned before, the status data may be used as a label for the training data. The label can then also be used as a classification class and as an output of the trained machine learning model. The label(s) used for the one or more subsets of the operational data may correspond to the status data that relate to the component of the manufacturing device. Such status data may comprise e.g., an event relating to and/or a characteristic property relevant for the utilization of the component as mentioned in the above. It should be understood that the execution of the trained machine learning model ML can take place in the gateway 21 and/or in the higher-level information system 22.

Turning to Figure 6 further embodiments are described in the following. The quality indicator Q, determined by the machine learning model, may subsequently be used to cause one or more further actions relating to the operation of the manufacturing device and/or the component and/or the production system as a whole. For example, the quality indicator Q may be to a user, e.g., by displaying the quality indicator Q to a user on a display screen. Furthermore, an alert may be initiated based on the quality indicator Q, e.g., a notification displayed on a display screen of the manufacturing device. The alert may instead or additionally be displayed to a user in a software application in the cloud. Furthermore, it is possible to prevent based on the quality indicator Q further usage of the component. Still further, the quality indicator Q may be used for indicating and/or initiating based on the quality indicator Q a component inspection. Still further, it is proposed to use the quality indictor Q to at least temporarily stop, based on the quality indicator, operation of the manufacturing device, e.g., by shutting down the manufacturing device or by changing the operation mode of the manufacturing device.

It is an advantage of the invention that the operational data is divided into individual measurements according to individual triggers. Such triggers may be introduced by a user. A trigger may be an event such as, e.g., a tool insertion, and marked by tags. Additional results, for example on quality, events and tool instances, can also be assigned to the individual measurements manually and automatically.

Hence, a computer program, i.e. a software, may comprise a function to record tool related events that can be used for tool lifecycle management. These recorded events may be used as status data. Hence the status data may comprise the start and/or end of an NC program. The status data may comprise error data, e.g., when a NC program is interrupted. The status data may further comprise loading and/or unloading of a tool, e.g., in a machine tool. The status data may comprise a tool change, e.g., when a tool loaded in a spindle of a machine tool is successfully moved. The status data may also comprise one or more timestamps that are recorded when any of the above events occur. The timestamps are then assigned to the status data.

Filters could be used for limiting the amount of received tool data: The following shows the characters as they are used in the filter options described below. For example, a filter that specifies the time range within which the operational data is recorded: The general format of this filter is: Timestamp <Start time> and Timestamp <End time>.

The operational data may include sensor data, such as data reflecting the operating temperature of a machine tool.

## Claims

1. A computer-implemented method for quality inspection of a component (1) of a manufacturing device (2, 3, 4), obtaining operational data (11) relating to the operation of the manufacturing device (2, 3, 4), the operational data (11) comprising time series of one or more physical properties of the manufacturing device (2, 3, 4),
obtaining status (12) data relating to a component (1) of the manufacturing device (2, 3, 4), the status data (12) comprising events relating to and/or characteristic properties relevant for the utilization of the component (1) within the manufacturing device (2, 3, 4),
labelling one or more subsets of the operational data (11) by associating one or more of the events and/or characteristic properties to the one or more subsets,
providing the one or more subsets as labelled training data for training a machine learning model (ML), wherein the machine learning model (ML) serves for outputting a quality indicator (Q) based on the labelled training data input,
and providing the trained machine learning model (ML) for quality inspection.

2. The method according to claim 1, further comprising the steps of:
creating a query comprising at least one first condition for the operational data (11) and at least one second condition for the status data (12),
retrieving, based on the query, one or more subsets of the operational data (11) fulfilling the first condition and
falling within a time span during which the second condition is fulfilled by the status data (12).

3. The method according to claim 1 or 2, further comprising at least one of the steps of:
providing the quality indicator (Q) to a user, and/or
initiating based on the quality indicator (Q) an alert, e.g., a notification displayed on a display screen of the manufacturing device/to a user/ app in the cloud, and/or
preventing based on the quality indicator (Q) further usage of the component, and/or
indicating/initiating based on the quality indicator (Q) a component inspection, and/or
at least temporarily stopping based on the quality indicator operation (Q) of the manufacturing device (2, 3, 4).

4. The method according to claim 1, further comprising the steps of:
recording, by the manufacturing device (2, 3, 4), a time stamp with each data item of the time series of the operational data (11), and
transmitting, by a first client (C1) communicatively coupled to the manufacturing device (2, 3, 4), the operational data (11) to a first server (S1) and storing the time series in a first database communicatively coupled to the first server (S1) ;
recording, by a second client (C2), a time stamp with each event of the status data (12), and transmitting the events to a second server (C2) and storing the status data (12) in a second database communicatively coupled to the second server (S2) .

5. The method according to any of the preceding claims, further comprising the steps of:
querying the first database based on a first part of the query comprising the first condition,
querying the first or third database based on a second part of the query comprising the second condition.

6. The method according to any one the preceding claims, further comprising the steps of:
identifying concurrent time spans within the operational data (11) and the status data (12) fulfilling the first and second condition of the query, respectively.

7. An apparatus (21, 22), preferably comprising a processor and a memory, operative to perform the method steps of any one of the preceding claims.

8. The apparatus (21, 22) according to the preceding claim, further comprising
a machine tool (4) comprising a first client (C1) for providing the operational data (11) to a server (S1), implemented in hardware and/or software,
a tool management system (S2), implemented in software, for providing the status data (12) to the server (S1).

9. A computer program, comprising program code that when executed performs the method steps of any one of the claims 1 to 7.

10. An non-transitory medium, on which the computer program according to the preceding claim is stored.
